# EUROPÄISCHE PATENTANMELDUNG

(11) **EP 2 477 461 A1**
(43) Veröffentlichungstag der Anmeldung: **18.07.2012**
(21) Anmeldenummer: 11009501.5
(22) Anmeldetag: 01.12.2011
(51) Int. Cl.: H05B 37/02, H05B 39/04, H04B 3/54

(54) **Beleuchtungsanlagen-Ansteuersystem**

(30) Priorität: 13.01.2011 DE 102011008503
(71) Anmelder: ABB AG, 68309 Mannheim (DE)
(72) Erfinder: Goldyn, Dirk, 58454 Witten (DE); Czimmeck, Frank, 58511 Lüdenscheid (DE); Clever, Gerhard, 58553 Halver (DE); Linde, Holger, 44137 Dortmund (DE)

(57) **Zusammenfassung**

Es wird ein Beleuchtungsanlagen-Ansteuersystem mit einem in Form eines Unterputz-Installationsgeräts ausgebildeten Steuergerät (1) vorgeschlagen, welches über einen Anschlussklemmenblock (2) mit dem Phasenleiter (L) eines Wechselspannungsnetzes und einem Lastleiter (L') verbunden ist, und mit einer Beleuchtungsanlage (9), welche über einen Anschlussklemmenblock (10) mit dem Nulleiter (L) des Wechselspannungsnetzes und dem Lastleiter (L') verbunden ist,
• wobei das Steuergerät (1) ein über einen Steuergerät-Mikrocontroller (5) ansteuerbares Steuergerät-Leistungsteil (3, 4) und ein den Steuergerät-Mikrocontroller (5) beaufschlagendes Einstellelement (7) zur Vorgabe eines Helligkeitswerts umfasst,
• wobei das Steuergerät (1) ein dem einzustellenden Helligkeitswert entsprechendes Steuersignal auf die Netzwechselspannung derart aufmoduliert, dass das Steuergerät (1) als Kodierer für Helligkeitsinformationen dient,
• wobei die Beleuchtungsanlage (9) ein über einen HF-PWM-Mikrocontroller (17) ansteuerbares und in Form eines Hochfrequenz-Pulsweitenmodulation-Generators ausgebildetes, in Reihe mit einem Leuchtelement (15) über ein LC-Filter (11) an den Anschlussklemmenblock (10) angeschlossenes HF-PWM-Leistungsteil (13, 16) umfasst,
• wobei der HF-PWM-Mikrocontroller (17) das Steuersignal aus der Ausgangswechselspannung (u_{L'}) des Lastleiters (L') dekodiert und das HF-PWM-Leistungsteil (13, 16) dementsprechend ansteuert.

## Beschreibung

Die Erfindung betrifft ein Beleuchtungsanlagen-Ansteuersystem mit einem in Form eines Unterputz-Installationsgeräts ausgebildeten Steuergerät und einer Beleuchtungsanlage, welche ein ansteuerbares Leistungsteil aufweist.

Beleuchtungsanlagen-Ansteuersysteme sind allgemein bekannt, es wird hierzu beispielsweise auf den Busch-Jaeger Katalog 2009, BJE 0001-0-1117/09.08/0502-M, dpi 404103, Seiten 288 - 292 hingewiesen. Im bekannten Fall erfolgt die Helligkeitssteuerung einer Beleuchtungsanlage nach dem Phasenanschnitts- bzw. Phasenabschnittsprinzip, wie beispielsweise auch aus der EP 0 618 667 B1 bekannt. Nachteilig dabei ist die nicht sinusförmige Stromaufnahme aus dem Wechselspannungsnetz, wodurch sich beispielsweise Probleme hinsichtlich unerwünschter Stromoberwellen ergeben. Ferner ist die Qualität der Helligkeitssteuerung von der Netzfrequenz (Netzfrequenzschwankungen) und von der Netzfrequenz überlagerten Tonfrequenzen (Rundsteuersignale) abhängig. Des Weiteren entstehen im Leistungsteil des Unterputz-Installationsgeräts relativ hohe Verlustleistungen.

Der Erfindung liegt die Aufgabe zugrunde, ein optimiertes Beleuchtungsanlagen-Ansteuersystem anzugeben, bei welchem das Steuergerät und die räumlich hiervon getrennt montierte Beleuchtungsanlage möglichst ohne Rückwirkung, insbesondere ohne Oberwellenbelastung, auf das speisende Wechselspannungsnetz betrieben werden können.

Diese Aufgabe wird erfindungsgemäß gelöst durch ein Beleuchtungsanlagen-Ansteuersystem mit einem in Form eines Unterputz-Installationsgeräts ausgebildeten Steuergerät, welches über einen Anschlussklemmenblock mit dem Phasenleiter eines Wechselspannungsnetzes und einem Lastleiter verbunden ist, und mit einer Beleuchtungsanlage, welche über einen Anschlussklemmenblock mit dem Nulleiter des Wechselspannungsnetzes und dem Lastleiter verbunden ist,
- wobei das Steuergerät ein über einen Steuergerät-Mikrocontroller ansteuerbares Steuergerät-Leistungsteil und ein den Steuergerät-Mikrocontroller beaufschlagendes Einstellelement zur Vorgabe eines Helligkeitswerts umfasst,
- wobei das Steuergerät ein dem einzustellenden Helligkeitswert entsprechendes Steuersignal auf die Netzwechselspannung derart aufmoduliert, dass das Steuergerät als Kodierer für Helligkeitsinformationen dient,
- wobei die Beleuchtungsanlage ein über einen HF-PWM-Mikrocontroller ansteuerbares und in Form eines Hochfrequenz-Pulsweitenmodulation-Generators ausgebildetes, in Reihe mit einem Leuchtelement über ein LC-Filter an den Anschlussklemmenblock angeschlossenes HF-PWM-Leistungsteil umfasst,
- wobei der HF-PWM-Mikrocontroller das Steuersignal aus der Ausgangswechselspannung des Lastleiters dekodiert und das HF-PWM-Leistungsteil dementsprechend ansteuert.

In Ausgestaltung der Erfindung kann die Bildung des Steuersignals respektive die Modulation durch kurzzeitiges Ausschalten oder kurzzeitiges Absenken der Netzwechselspannung zu vorgegebenen Zeitpunkten in Relation zum Nulldurchgang der Netzwechselspannung innerhalb der Sinuswelle erfolgt, wobei der vorgegebene Zeitpunkt in Relation zu dem zu übertragenden Helligkeitswert steht.

Alternativ hierzu können die Bildung des Steuersignals respektive die Modulation in Form vorgegebener, unterschiedlich langer Austastsequenzen innerhalb der Sinuswelle der Netzwechselspannung erfolgen, wobei die Signaldauer in Relation zu dem zu übertragenden Helligkeitswert steht.

Dabei kann das Steuersignal entweder permanent vom Steuergerät erzeugt, kodiert und gesendet sowie von der Beleuchtungsanlage (9) permanent erfasst und dekodiert werden oder das.Steuersignal wird alternativ hierzu nur während eines Schaltvorgangs oder Dimmvorgangs vom Steuergerät erzeugt, kodiert und gesendet sowie von der Beleuchtungsanlage erfasst und dekodiert.

In Erweiterung der vorstehend erläuterten Vorschläge kann das Steuersignal an Stelle des oder zusätzlich zum Helligkeitswert(s) andere Information, beispielsweise die einzustellende Lichtfarbe des Leuchtelements beinhalten.

Die mit der Erfindung erzielbaren Vorteile liegen insbesondere darin, dass das vorgeschlagene Beleuchtungsanlagen-Ansteuersystem universell für ohmsche (resistive), kapazitive und induktive Leuchtelemente geeignet ist. Mittels des HF-PWM-Generators der Beleuchtungsanlage ist entsprechend dem übertragenen Helligkeitswert eine sinusförmige Ausgangsspannung mit variabler Amplitude einstellbar. Es ist eine flackerfreie Ansteuerung des Leuchtelements möglich. Es ist keine Synchronisation mit der Netzwechselspannung nötig. Ferner ist ein Betrieb sowohl am 50Hz-Wechselspannungsnetz als auch am 60Hz-Wechselspannungsnetz universell möglich. Das vorgeschlagene Beleuchtungsanlagen-Ansteuersystem ist unempfindlich gegen Rundsteuersignale und Netzfrequenzschwankungen.

Zweckmäßige Ausgestaltungen der Erfindung sind in den Unteransprüchen gekennzeichnet.

Die Erfindung wird nachstehend an Hand der in der Zeichnung dargestellten Ausführungsbeispiele näher erläutert. Es zeigen:
- Fig. 1: eine Schaltskizze des Beleuchtungsanlagen-Ansteuersystem,
- Fig. 2 - 4: interessierende Netzwechselspannungs-/Zeit-Diagramme für unterschiedliche Möglichkeiten der Ansteuerung der Netzwechselspannung.

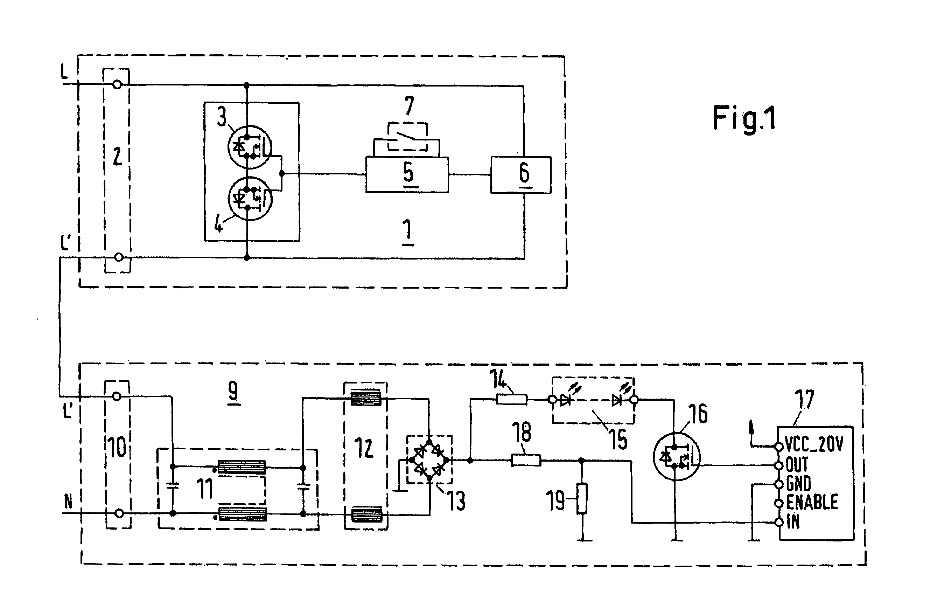

In Fig. 1 ist eine Schaltskizze des Beleuchtungsanlagen-Ansteuersystem dargestellt. Es sind ein Steuergerät 1 und eine hiervon räumlich getrennte Beleuchtungsanlage 9 zu erkennen, wobei an den Anschlussklemmenblock 2 des Steuergeräts 1 der Phasenleiter L eines Wechselspannungsnetzes und ein Lastleiter (aufbereitete Phase) L' sowie an den Anschlussklemmenblock 10 der Beleuchtungsanlage 9 der Lastleiter L' und der Nulleiter N des Wechselspannungsnetzes angeschlossen sind. Somit liegt bezüglich des Wechselspannungsnetzes (230V-Netz) eine Reihenschaltung von Steuergerät 1 und Beleuchtungsanlage 9 vor. Die Beleuchtungsanlage 9 umfasst ein Leuchtelement 15. Mit Hilfe des Steuergeräts 1 wird ein Steuersignal auf die Ausgangswechselspannung u_{L} aufmoduliert, während die Beleuchtungsanlage 9 dieses Signal dekodiert und eine Ansteuerung des Leuchtelements 15 in Abhängigkeit des Resultats dieser Dekodierung vornimmt.

Das Steuergerät 1 umfasst die folgenden Baukomponenten:
- den vorstehend bereits erwähnten Anschlussklemmenblock 2,
- zwei in Reihe zwischen Phasenleiter L und Lastleiter L' geschaltete Leistungshalbleiter (Leistungstransistoren, insbesondere Power-MOS-Transistoren) 3, 4, auch mit Steuergerät-Leistungsteil bezeichnet,
- einen mit den Ansteueranschlüssen der Leistungshalbleiter 3, 4 verbundenen Steuergerät-Mikrocontroller 5, welcher mittels eines Einstellelements 7 beaufschlagbar ist,
- ein mit dem Phasenleiter L und dem Lastleiter L' verbundenes Netzteil 6 für die Energieversorgung des Steuergerät-Mikrocontrollers 5.

Das Steuergerät 1 ist in Form eines in eine handelsübliche UP-Gerätedose (60 mm Durchmesser) montierbaren elektrischen Installationsgerätes mit Gerätesockel inklusive Tragring und Federspreizen sowie Bedienteil und Abdeckrahmen ausgebildet und entspricht einem einfachen Tastdimmer. Vorteilhaft sind dabei Funkentstörkomponenten und aufwändige Synchronisationsschaltungen nicht erforderlich.

Das Steuergerät 1 kann vorteilhaft mit beliebigen Komponenten eines konventionellen Installationsgeräte-Programms für Steckdosen / Schalter / Taster kombiniert werden, desgleichen wird ein konventioneller Abdeckrahmen dieses konventionellen Installationsgeräte-Programms eingesetzt. Unter konventionellen Installationsgeräte - Programmen werden dabei Programme verstanden, wie sie von zahlreichen Installationsgeräte-Herstellern vertrieben werden und verschiedene Wippschalter-Einsätze, Wipptaster-Einsätze, Steckdosen-Einsätze sowie Wippen und Abdeckrahmen 1fach, 2fach, 3fach, 4fach in bestimmten Designs und bestimmten Farben beinhalten.

Gleichermaßen ist eine vereinfachte Ausführungsform des Steuergeräts 1 realisierbar, in welcher Unterputz-Geräteeinsatz, Bedienteil und Abdeckrahmen eine (einstückige) Einheit bilden.

Die Beleuchtungsanlage 9 umfasst die folgenden Baukomponenten:
- den vorstehend bereits erwähnten Anschlussklemmenblock 10,
- ein an den Anschlussklemmenblock 10 angeschlossenes LC-Filter 11,
- an das LC-Filter 3 angeschlossene gekoppelte Induktivitäten 12,
- ein wechselstromseitig an die gekoppelte Induktivitäten 12 angeschlossener, ungesteuerter Vollwellen-Brückengleichrichter 13, dessen negative Gleichstromklemme das Massepotential bildet,
- ein Leuchtelement 15, vorzugsweise aus mindestens einer LED bestehend, welches über einem Vorwiderstand 14 oder ein anderes strombegrenzendes Element an die positive Gleichstromklemme des Vollwellen-Brückengleichrichters 13 angeschlossen ist,
- ein Leistungshalbleiter (Leistungstransistor mit antiserieller Diode) 16, zusammen mit dem Vollwellen-Brückengleichrichter 13 auch als HF-PWM-Leistungsteil 16 bezeichnet, dessen Hauptelektroden einerseits mit dem Leuchtelement 15, andererseits mit dem Massepotential verbunden sind,
- einen HF-PWM-Mikrocontroller (Hochfrequenz-Pulsweitenmodulation-Mikrocontroller) 17, welcher über seinen OUT-Ausgang an die Steuerelektrode des Leistungshalbleiters 16 angeschlossen ist und über seinen IN-Eingang mit dem gemeinsamen Verbindungspunkt von zwei Beschaltungswiderständen 18, 19 verbunden ist, welche in Serie zwischen der positiven Gleichstromklemme des Vollwellen-Brückengleichrichters 13 und Massepotential liegen.

Die aus Vollwellen-Brückengleichrichter 13, Leistungshalbleiter 16 und HF-PWM-Mikrocontroller 17 gebildete Konfiguration wird nachfolgend auch als Konverter bezeichnet. Dabei können alternativ zu Brückengleichrichter und Leistungstransistor auch zwei antiseriell geschaltete Leistungstransistoren verwendet werden (wie im Steuergerät 1).

Nachfolgend wird die Funktionsweise des Beleuchtungsanlagen-Ansteuersystems näher erläutert. Das Steuergerät 1 stellt dem Konverter der Beleuchtungsanlage 9 nahezu die komplette Netzwechselspannung des Wechselspannungsnetzes zur Verfügung. Lediglich zur Informationsübertragung wird während einer definierten Zeitspanne die Signalform der Netzwechselspannung beeinflusst, d. h. das Steuergerät 1 fungiert als Kodierer (Encoder) für Helligkeitsinformationen, indem es ein Steuersignal auf die Netzwechselspannung aufmoduliert. Diese Informationsübertragung respektive Modulation kann z. B. durch Ausschalten oder Absenken der Netzwechselspannung zu vorgegebenen Zeitpunkten innerhalb der Sinuswelle erfolgen. Der gewünschte Helligkeitswert (als Steuersignal) kann z.B. über die Position eines Slots innerhalb einer Halbwelle vom Steuergerät 1 zur Beleuchtungsanlage 9 übermittelt werden.

Alternativ kann das Steuergerät 1 wie eine Dimmer-Nebenstelle kurze und lange Austastsequenzen, z. B. in der ersten Millisekunde nach jedem Nulldurchgang der Netzwechselspannung, (als Steuersignal) an den Konverter der Beleuchtungsanlage 9 übermitteln. Damit kann Schalten und Dimmen im Sinne einer 1-Flächen-Dimmerbedienung realisiert werden. Steuersignale werden nur zum Zeitpunkt der Bedienung (und nicht periodisch bei jeder Vollwelle der Netzwechselspannung), gesendet, so dass keine erhöhte Funkstörspannung entsteht. Das Steuergerät 1 kann Leistungen von etwa 500W schalten und dimmen, wenn die Stromaufnahme des Konverters annähernd sinusförmig ist.

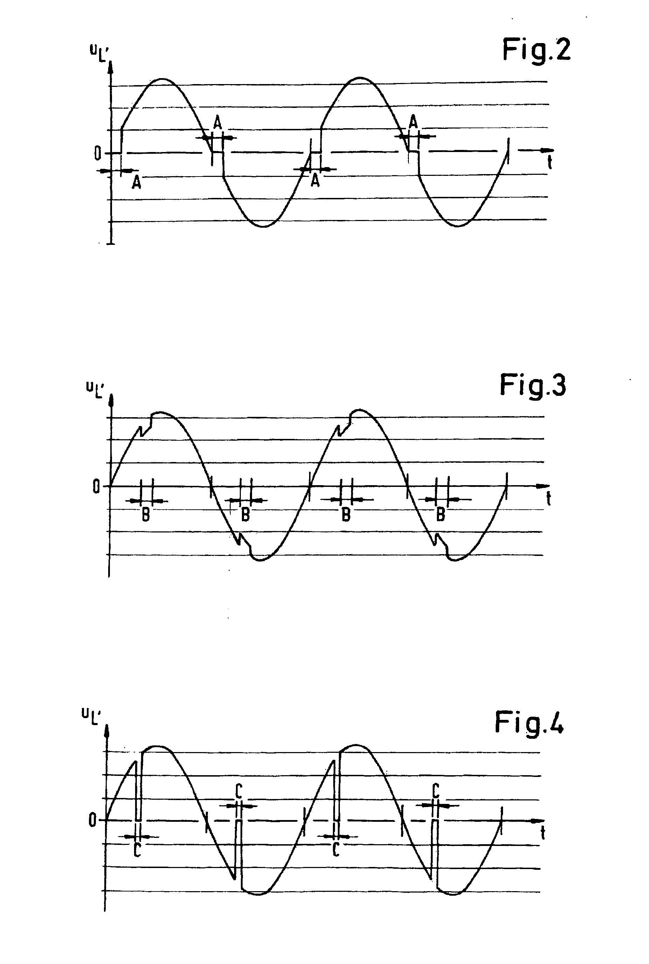

In den Fig. 2 - 4 sind interessierende Netzwechselspannungs-/Zeit-Diagramme für unterschiedliche Möglichkeiten der Ansteuerung der Netzwechselspannung dargestellt, wobei u_{L'} die Ausgangswechselspannung zwischen Lastleiter L' und Nulleiter N sowie t die Zeitachse bezeichnen:
- Fig. 2 zeigt 0...1 ms nach dem Nulldurchgang der Netzwechselspannung während der Zeitspannen A generierte Tastimpulse als Steuersignale.
- Fig. 3 zeigt über Spannungseinbrüche während der Zeitspannen B generierte Tastimpulse als Steuersignale.
- Fig. 4 zeigt durch Einschalten/Ausschalten während der Zeitspannen C generierte Tastimpuls als Steuersignale.

Der Konverter der Beleuchtungsanlage 9, vorzugsweise zur Steuerung von LEDs, umfasst einen integrierten Dekodierer (Decoder) zum Dekodieren der vom Steuergerät 11 über die Netzwechselspannung übermittelten Steuersignale und stellt nach dem Dekodieren der übermittelten Steuersignale die gewünschte Helligkeit des Leuchtelements 15 ein. Hierbei sind zwei Verfahren einsetzbar:
- Analoge Signalübertragung: Der Zeitpunkt des Steuersignals in Relation zum Nulldurchgang der Netzwechselspannung wird permanent gemessen und bestimmt den Helligkeitswert an der Last.
- Digitale Signalübertragung: Das Steuersignal wird nur im Schaltvorgang oder Dimmvorgang vom Steuergerät 1 gesendet und von der Beleuchtungsanlage 9 über die Signaldauer ausgewertet. Kurze Signaldauer, z. B. im Bereich 60...400ms, entsprechen Schaltimpulsen, längere Signaldauern, z. B. im Bereich > 400ms entsprechen Dimmimpulsen.

Der Konverter ist derart konzipiert, dass eine sinusförmige Stromentnahme aus dem Wechselspannungsnetz sichergestellt ist. Dies wird realisiert, indem das Leuchtelement 15 mit einer pulsweitengesteuerten Hochfrequenz (HF-PWM-Generator) mittels des Leistungshalbleiters 16 betrieben wird. Der Hochfrequenz-Pulsweitenmodulation-Generator respektive HF-PWM-Generator ist freilaufend und benötigt keine Synchronisation mit dem Wechselspannungsnetz. Der Leistungshalbleiter 16 wird vorzugsweise im Hochfrequenz-Bereich 20.....100kHz in einem Ansteuer-Bereich (Pulsweite) 10.....90% betrieben. Der die Netzwechselspannung taktende HF-PWM-Generator reduziert die Amplitude der Spannung am Leuchtelement 15 gegenüber der Netzwechselspannung, ohne dabei die Sinusform der Spannung zu verändern. Das Tastverhältnis (Puls-/Pausenverhältnis der Hochfrequenz-Taktung) des PWM-Signals bestimmt die Höhe (Amplitude) der dem Leuchtelement 15 zugeführten Spannung und des sinusförmigen Laststromes. Das LC-Filter 11 filtert die Hochfrequenz-Anteile aus und lässt netzseitig nur den niederfrequenten Strom fließen. Dieses Steuerungsprinzip ist unabhängig von der Art des angeschlossenen Leuchtelements und vorteilhaft universell für induktive, kapazitive und resistive Leuchtelemente geeignet.

Der HF-PWM-Mikrocontroller 17 wertet die über den Vollwellen-Brückengleichrichter 13 erhaltenen, vom Steuergerät 11 generierten Steuersignale aus und setzt sie in entsprechende Helligkeitswerte um, siehe den Abgriff am Verbindungspunkt der Beschaltungswiderstände 18, 19.

Auch wenn vorstehend stets davon die Rede ist, dass der Helligkeitswert als Steuersignal vom Steuergerät 1 zur Beleuchtungsanlage 9 übertragen wird, so können alternativ auch andere Informationen übertragen werden, z. B. kann zusätzlich zum Helligkeitswert oder alternativ hierzu eine am Leuchtelement 15 der Beleuchtungsanlage 9 einzustellende Lichtfarbe übertragen werden.

### Bezugszeichenliste

- 1: Steuergerät
- 2: Anschlussklemmenblock
- 3: Leistungshalbleiter (Leistungstransistor)
- 4: Leistungshalbleiter (Leistungstransistor)
- 5: Steuergerät-Mikrocontroller
- 6: Netzteil
- 7: Einstellelement
- 8: -
- 9: Beleuchtungsanlage mit HF-PWM-Generator zur Einstellung einer gewünschten Helligkeit des Leuchtelements
- 10: Anschlussklemmenblock
- 11: LC-Filter
- 12: gekoppelte Induktivitäten
- 13: Vollwellen-Brückengleichrichter
- 14: Vorwiderstand oder ein anderes strombegrenzendes Element
- 15: Leuchtelement (LED)
- 16: Leistungshalbleiter (Leistungstransistor), 13 + 16 = HF-PWM-Leistungsteil
- 17: HF-PWM-Mikrocontroller
- 18: Beschaltungswiderstand
- 19: Beschaltungswiderstand

- L: Phasenleiter des Wechselspannungsnetzes
- L': Lastleiter, aufbereitete Phase
- N: Nulleiter des Wechselspannungsnetzes
- t: Zeit
- u_{L'}: Ausgangswechselspannung zwischen Lastleiter L' und Nulleiter N

## Patentansprüche

1. Beleuchtungsanlagen-Ansteuersystem mit einem in Form eines Unterputz-Installationsgeräts ausgebildeten Steuergerät (1), welches über einen Anschlussklemmenblock (2) mit dem Phasenleiter (L) eines Wechselspannungsnetzes und einem Lastleiter (L') verbunden ist, und mit einer Beleuchtungsanlage (9), welche über einen Anschlussklemmenblock (10) mit dem Nulleiter (L) des Wechselspannungsnetzes und dem Lastleiter (L') verbunden ist,
• wobei das Steuergerät (1) ein über einen Steuergerät-Mikrocontroller (5) ansteuerbares Steuergerät-Leistungsteil (3, 4) und ein den Steuergerät-Mikrocontroller (5) beaufschlagendes Einstellelement (7) zur Vorgabe eines Helligkeitswerts umfasst,
• wobei das Steuergerät (1) ein dem einzustellenden Helligkeitswert entsprechendes Steuersignal auf die Netzwechselspannung derart aufmoduliert, dass das Steuergerät (1) als Kodierer für Helligkeitsinformationen dient,
• wobei die Beleuchtungsanlage (9) ein über einen HF-PWM-Mikrocontroller (17) ansteuerbares und in Form eines Hochfrequenz-Pulsweitenmodulation-Generators ausgebildetes, in Reihe mit einem Leuchtelement (15) über ein LC-Filter (11) an den Anschlussklemmenblock (10) angeschlossenes HF-PWM-Leistungsteil (13, 16) umfasst,
• wobei der HF-PWM-Mikrocontroller (17) das Steuersignal aus der Ausgangswechselspannung (u_{L'}) des Lastleiters (L') dekodiert und das HF-PWM-Leistungsteil (13, 16) dementsprechend ansteuert.

2. Beleuchtungsanlagen-Ansteuersystem nach Anspruch 1, **dadurch gekennzeichnet, dass** die Bildung des Steuersignals respektive die Modulation durch kurzzeitiges Ausschalten oder kurzzeitiges Absenken der Netzwechselspannung zu vorgegebenen Zeitpunkten in Relation zum Nulldurchgang der Netzwechselspannung innerhalb der Sinuswelle erfolgt, wobei der vorgegebene Zeitpunkt in Relation zu dem zu übertragenden Helligkeitswert steht.

3. Beleuchtungsanlagen-Ansteuersystem nach Anspruch 1, **dadurch gekennzeichnet, dass** die Bildung des Steuersignals respektive die Modulation in Form vorgegebener, unterschiedlich langer Austastsequenzen innerhalb der Sinuswelle der Netzwechselspannung erfolgt, wobei die Signaldauer in Relation zu dem zu übertragenden Helligkeitswert steht.

4. Beleuchtungsanlagen-Ansteuersystem nach einem der Ansprüche 1 - 3, **dadurch gekennzeichnet, dass** das Steuersignal permanent vom Steuergerät (1) erzeugt, kodiert und gesendet sowie von der Beleuchtungsanlage (9) permanent erfasst und dekodiert wird.

5. Beleuchtungsanlagen-Ansteuersystem nach einem der Ansprüche 1 - 3, **dadurch gekennzeichnet, dass** das Steuersignal nur während eines Schaltvorgangs oder Dimmvorgangs vom Steuergerät (1) erzeugt, kodiert und gesendet sowie von der Beleuchtungsanlage (9) erfasst und dekodiert wird.

6. Beleuchtungsanlagen-Ansteuersystem nach einem der Ansprüche 1 - 5, **dadurch gekennzeichnet, dass** das Steuersignal an Stelle des oder zusätzlich zum Helligkeitswert(s) andere Information, beispielsweise die einzustellende Lichtfarbe des Leuchtelements (15) beinhaltet.

7. Beleuchtungsanlagen-Ansteuersystem nach Anspruch 1, **dadurch gekennzeichnet, dass** HF-PWM-Leistungsteil in Form eines Vollwellen-Brückengleichrichters (13) mit gleichstromseitig angeschlossenem Leistungstransistor (16) ausgebildet ist.

8. Beleuchtungsanlagen-Ansteuersystem nach Anspruch 1, **dadurch gekennzeichnet, dass** HF-PWM-Leistungsteil in Form zweier antiseriell geschalteter Leistungstransistoren ausgebildet ist.

9. Ansteuersystem nach Anspruch 1, **dadurch gekennzeichnet, dass** HF-PWM-Leistungsteil (13, 16) über gekoppelte Induktivitäten (12) angeschlossen ist.
